# EUROPEAN PATENT APPLICATION

(11) **EP 4 254 742 A1**
(43) Date of publication of application: **04.10.2023**
(21) Application number: 22165135.9
(22) Date of filing: 29.03.2022
(51) Int. Cl.: H02K 3/52

(54) **ELECTRIC MACHINE**

(71) Applicant: MAHLE International GmbH, 70376 Stuttgart (DE)
(72) Inventor: Suligoj, Matija, 5250 Solkan (SI)

(57) **Abstract**

The invention relates to an electric machine (1) comprising a rotor (2) arranged to rotate about a rotation axis (3), a stator (4) including a plurality of stator coils (5), a busbar unit (6) arranged to supply a drive current to the respective coils (5). The busbar unit (6) includes a plurality of busbars (7) each connected to at least one of the stator coils (5) and comprising a generally axially projecting terminal connector (8) for axial connection with a power supply connector (14), a busbar holder (9) made of an electrically insulating material extending in a direction perpendicular to the axial direction (10), whereby the busbar holder (9) comprises a plurality of grooves (11) which receive the respective busbars (7). The busbars (7) comprise a strip portion (7a) extending perpendicularly to the axial direction within one of the plurality of grooves (11), and at least one of the busbars (7) having a first terminal portion (7b) extending in the axial direction away from the strip portion (7a) followed by a second terminal portion (7c) extending from and perpendicular to the first terminal portion (7b), followed by a third terminal portion (7d) extending from the second terminal portion (7c) in the axial direction (10), whereby the third terminal portion(7d) is connected to or forms the axially projecting terminal connector (8), and at least one of the second or third terminal portions (7c, 7d) or the axially projecting terminal connector (8) contacts the busbar holder (9), whereby the third terminal portion (7d) is positioned above the busbar holder (9)in the axial direction.

## Description

### TECHNICAL FIELD

The invention relates to an electric machine according to the preamble of independent claim 1.

### BACKGROUND ART

A known prior art electric machine is disclosed in US 2013113313 A1. This shows an insulating busbar holder for holding busbars which connect the stator coils of the electric machine to connection terminals for connection to a power supply. The connection terminals project in the axial direction, i.e. in the direction of the rotational axis of the rotor, for connection with a power supply.

### SUMMARY

The electric machine according to the invention as defined in claim 1 has the advantage that, the terminal for connection with a power supply has improved resilience against axial and/or transverse forces acting on the terminal during connection to the power supply.

This object is achieved according to the invention with an electric machine comprising a rotor arranged to rotate about a rotation axis, a stator including a plurality of stator coils and a busbar unit arranged to supply a drive current to the respective coils, wherein the busbar unit includes a plurality of busbars each connected to at least one of the stator coils and comprising a generally axially projecting terminal connector for axial connection with a power supply connector, the busbar unit further including a busbar holder made of an electrically insulating material extending in a direction perpendicular to the axial direction, whereby the busbar holder comprises a plurality of grooves which receive the respective busbars, wherein the busbars each comprise a strip portion extending transversely to the axial direction within one of the plurality of grooves, and at least one of the busbars having a first terminal portion extending in the axial direction away from the strip portion followed by a second terminal portion extending from and perpendicular to the first terminal portion, followed by a third terminal portion extending from the second terminal portion in the axial direction, whereby the third terminal portion is connected to or forms the axially projecting terminal connector, whereby at least one of the second or third terminal portions or the axially projecting terminal connector contacts the busbar holder, and the third terminal portion is positioned above the busbar holder in the axial direction.

The axial direction being in the direction of a rotational axis of the rotor. The openings of the grooves in the busbar holder facing in one embodiment in the axial direction.

As the second or third terminal portions or the axially projecting terminal connector contact the bus bar holder and the third terminal portion is positioned above the busbar holder in the axial direction, any axial force applied to the third terminal portion is transferred to the busbar holder with reduced or no resultant bending moments applied to other parts of the busbar, such that the third terminal portion does not bend when an axial force is applied. This is particular important if the terminal connectors are connected to the power supply, e.g. through a controller unit, by moving the motor and the power supply together axially to make the connection. This is important during assembling control unit with motor (terminals), as during assembly the terminal connectors are susceptible to being bent.

Advantageously at least the terminal portions of the busbar can be free of overmolded material, in particular overmolded plastic material. Overmolded material can be damaged by welding terminal parts. Alternatively at least parts of the terminal portions of the busbar can be overmolded, in particular with a plastic material, to further increase the resistance to bending of the terminals when axial or transverse forces are applied.

In an advantageous embodiment, the busbar holder has support projections extending axially towards and contacting the second and/or third terminal portions. The support projections enable the axial length of the third terminal portion to be reduced, whilst giving axial support to the second and/or third terminal portions. By reducing the axial length of the third terminal portion the bending moments of the terminal resulting from transverse forces are reduced and the terminal is less prone to damage.

Support projections can also be arranged on both sides of the first terminal portion in a direction perpendicular to the axial and transverse directions and extend in the axial direction to the height of the second terminal portion. By having a support projection on either side of the axially extending first terminal portion, deformation of the first terminal portion is prevented over the whole length of the first terminal portion.

The height h of the busbar holder in the region of the projections is preferably at least 1.3 times the height of the busbar in a region adjacent to the projections.

The second terminal portion preferably contacts at least two of the support projections of the busbar holder. Axial forces applied to the terminal are therefore spread more evenly between the ridges between the grooves of the busbar holder in order to avoid damaging the busbar holder.

The strip portion of the busbar and the first, second and third terminal portions are preferably punched as one piece out of sheet metal, whereby the second terminal portion and third terminal portion are formed by bending, so that the second terminal portion lies in a plane orthogonal to the first and second terminal portions.

The strip portions of the busbars are preferably snap fitted into the grooves of the busbar holder, so that further fixation e.g. by overmolding, is not required.

In one embodiment the axially projecting terminal connector may be a separate part which is attached, preferably by welding to the third terminal portion. The material properties of the axially projecting terminal connector may therefore be different to that of the remaining busbar. The axially projecting terminal connector may be plated, for example to improve the electrical connection.

In another embodiment the axially projecting terminal connector can be formed from one piece with the strip portion of the busbar.

The busbars are preferably arranged concentrically in the same axial plane.

The busbar holder can be made of a one shot molded part.

The electric machine as described above can be use in particular as an electric power steering motor.

### BRIEF DESCRIPTION OF THE DRAWINGS

Embodiments will now be described by way of example only with reference to the accompanying drawings, in which:
Figure 1 is a schematic cross-section view of an electric machine according to the invention,
Figure 2 is a perspective view of a busbar unit according to the invention.
Figure 3 is a cross section view of the busbar unit of fig. 2.

### DETAILED DESCRIPTION

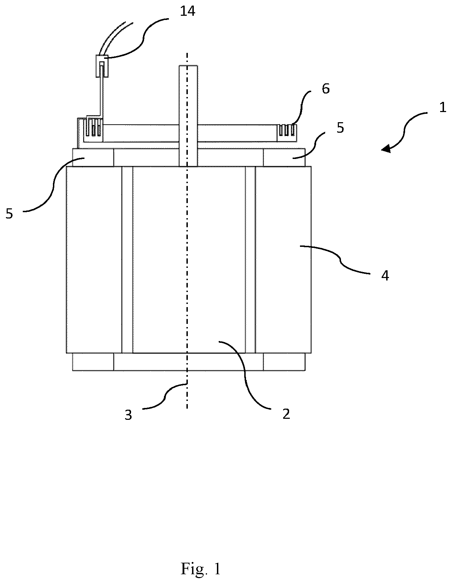

Fig. 1 shows schematically an electric machine 1 according to one embodiment of the invention. The electric machine comprises a rotor 2 arranged to rotate about a rotation axis 3 and a stator 4 including a plurality of stator coils 5 and a busbar unit 6 arranged to supply a drive current to the respective coils 5. The busbar unit 6 can be attached to the stator 4 or the motor housing (not shown).

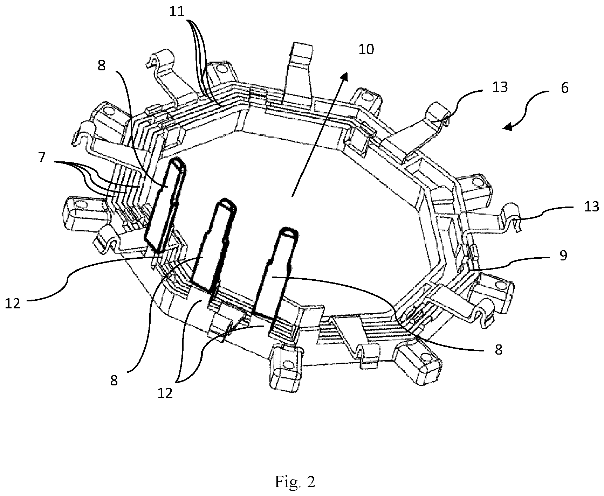

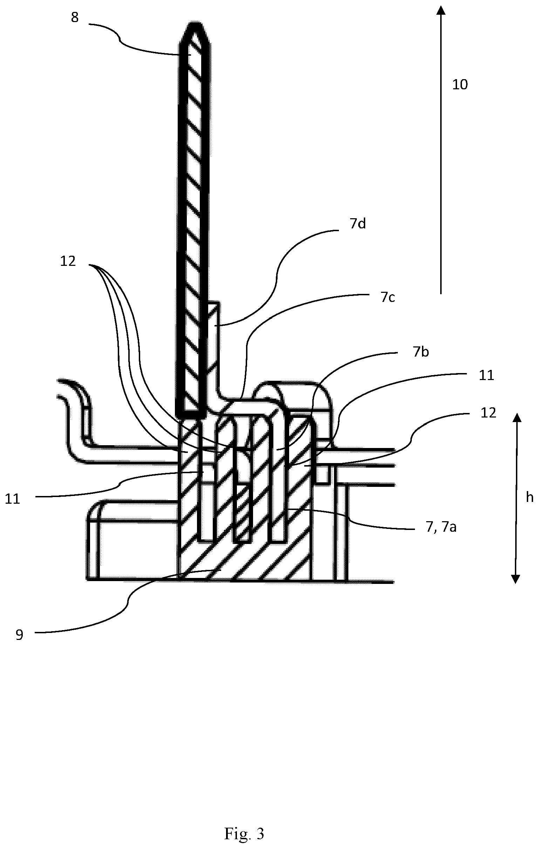

Now referring to figures 2 and 3, the busbar unit 6 includes a plurality of busbars 7 each connected to two of the stator coils 5. Each busbar 7 comprises a generally axially projecting terminal connector 8 for axial connection with a power supply connector 14, shown in fig. 1.

The busbar unit 6 comprises a busbar holder 9 made of an electrically insulating material, e.g. plastic. The busbar holder 9 extends in a direction perpendicular to the axial direction 10, which is in the direction of the rotational axis 3, in a generally ring shaped form. A plurality of grooves 11, in this case three, are provided in the busbar holder, and receive the respective busbars 7. The openings of the grooves 11 in the busbar holder facing in the axial direction 10 away from the stator. The busbars 7 can be inserted into the grooves 11 and snap fitted into the grooves 11.

The busbars 7 each comprise a strip portion 7a extending transversely to the axial direction 10 within one of the plurality of grooves 11. The strip portion 7a extends within the groove 11 to connect coil terminals 13 at one end with the power terminal connectors 8 at the other end.

As can be seen in figure 3, which shows one of the busbars 7 in the area of a terminal 8, the busbar 7 has a first terminal portion 7b extending in the axial direction 10 away from the strip portion 7a. A second terminal portion 7c extends from and perpendicular to the first terminal portion 7b. A third terminal portion 7d then extends from the second terminal 7c portion in the axial direction 10. The first, second and third terminal portions 7b, 7c, 7d therefore form together a stepped shape in the busbar 7.

The third terminal portion 7d is connected, preferably by welding, to the axially projecting terminal connector 8. The material properties of the axially projecting terminal connector 8 may therefore be different to that of the remaining busbar 7. The axially projecting terminal connector 8 may be plated, for example to improve the electrical connection. It is however also possible that third terminal portion 7d is formed as the terminal connector 8, so that it is made in one piece with the other parts of the busbar 7.

The busbar holder 9 has support projections 12 extending axially towards and contacting the second 7c and/or third terminal 7d portions. The support projections 12 are formed by way of an increase in the height h of the busbar holder 9 in the area of the terminal 8 for connection to the power supply. The height h of the busbar holder 9 in the region of the projections 12 is at least 1.3 times the height of the busbar in a region adjacent to the projections.

The support projections 12 enable the axial length of the terminal connector 8 to be reduced, whilst giving axial support to the second 7c and/or third terminal 7d portions. By reducing the axial length of the terminal connector 8 the bending moments of the terminal parts resulting from axial and/or transverse forces are reduced and the terminal parts are less prone to damage.

Support projections 12 are arranged on both sides of the first terminal portion 7b in a direction perpendicular to the axial direction (i.e. on the left and right sides of the first terminal portion 7b as shown in figure 3), , and extend in the axial direction 10 to the height h of the second terminal portion 7c. By having a support projection 12 on either side of the axially extending first terminal portion 7b, deformation of the first terminal portion 7b is prevented over the whole length of the first terminal portion 7b.

In the embodiment in figure 3 the second terminal portion 7c contacts two of the support projections of the busbar holder 9. In other embodiments the third terminal portion 7d or the separately attached terminal connector 8 could contact the support projections of the busbar holder 9. In this way the axial loads on the terminal connector 8 can be transferred to the busbar holder 9 preventing damage to the terminal parts. In particular the terminal connector 8 can positioned above the busbar holder in the axial direction as shown, so that axial forces can be directly transferred to the busbar holder 9.

The terminal portions 7b, 7c, 7d, 8 of the busbar 7 are advantageously free of overmolded material, in particular overmolded plastic material. Overmolded material can be damaged when welding is perfomed too close to the busbar holder 9, therefore omitting plastic overmolded material in the area of the terminals allows e.g. in situ welding of the terminal portions.

The strip portion 7a of the busbar and the first, second and third terminal portions 7b, 7c, 7d are punched as one piece out of sheet metal, whereby the second terminal portion 7c and third terminal portion 7d are formed by bending the busbar at two positions, so that the second terminal portion 7b lies in a plane orthogonal to the first and second terminal portions 7b, 7d.

### LIST OF REFERENCE NUMERALS

- 1.: Electric machine
- 2.: Rotor
- 3.: Rotation axis
- 4.: Stator
- 5.: Stator coils
- 6.: Busbar unit
- 7.: Busbars
7a Strip portion
7b First terminal portion
7c Second terminal portion
7d Third terminal portion
- 8.: Terminal connector
- 9.: Busbar holder
- 10.: Axial direction
- 11.: Grooves
- 12.: Support projections
- 13.: Coil terminal
- 14.: Power supply connector

## Claims

1. An electric machine (1) comprising:
a rotor (2) arranged to rotate about a rotation axis (3),
a stator (4) including a plurality of stator coils (5),
a busbar unit (6) arranged to supply a drive current to the respective coils (5), wherein the busbar unit (6) includes:
- a plurality of busbars (7) each connected to at least one of the stator coils (5) and comprising a generally axially projecting terminal connector (8) for axial connection with a power supply connector (14),
- a busbar holder (9) made of an electrically insulating material extending in a direction perpendicular to the axial direction (10), whereby the busbar holder (9) comprises a plurality of grooves (11) which receive the respective busbars (7),
- wherein the busbars (7) each comprise a strip portion (7a) extending perpendicularly to the axial direction within one of the plurality of grooves (11), and at least one of the busbars (7) having a first terminal portion (7b) extending in the axial direction away from the strip portion (7a) followed by a second terminal portion (7c) extending from and perpendicular to the first terminal portion (7b), followed by a third terminal portion (7d) extending from the second terminal portion (7c) in the axial direction (10), whereby the third terminal portion(7d) is connected to or forms the axially projecting terminal connector (8),
- whereby at least one of the second or third terminal portions (7c, 7d) or the axially projecting terminal connector (8) contacts the busbar holder (9), and the third terminal portion (7d) is positioned above the busbar holder (9)in the axial direction.

2. An electric machine (1) according to claim 1 wherein at least the terminal portions (7b, 7c, 7d, 8) of the busbar (7) are free of overmolded material.

3. An electric machine (1) according to claims 1 or 2, whereby the busbar holder (9) has support projections (12) extending axially towards and contacting the second and/or third terminal portions (7c, 7d).

4. An electric machine (1) according to one of claims 1 to 3, wherein support projections (12) are arranged on both sides of the first terminal portion (7a) in a direction perpendicular to the axial and transverse directions and extend in the axial direction to the height of the second terminal portion (7c).

5. An electric machine (1) according to one of claims 1 to 4, whereby height (h) of the busbar holder in the region of the projections is preferably at least 1.3 times the height of the busbar (7) in a region adjacent to the projections.

6. An electric machine (1) according to one of claims 3 to 5, whereby the second terminal portion (7c) contacts at least two of the support projections (12) of the busbar holder (9).

7. An electric machine (1) according to one of the preceding claims, whereby the axially projecting terminal connector (8) is welded to the third terminal portion (7d).

8. An electric machine (1) according to one of the preceding claims, wherein the strip portion (7a) and the first, second and third terminal portions of the busbar (7) are formed out of a single piece of sheet metal.

9. An electric machine (1) according to one of the preceding claims, whereby the axially projecting terminal connector (8) is formed from one piece with the strip portion.

10. An electric machine (1) according to one of the preceding claims, whereby the busbars (7) arranged concentrically in the same axial plane

11. An electric machine (1) according to one of the preceding claims, whereby the strip portions (7a) are snap fitted into the grooves (11).
